**Europäisches Patentamt**

**European Patent Office**

**Office européen des brevets**

(19)

(11) Numéro de publication : **0 514 291 A2**

# (12) DEMANDE DE BREVET EUROPEEN

(21) Numéro de dépôt : **92420147.8**

(22) Date de dépôt : **07.05.92**

(51) Int. Cl.⁵ : **A01K 61/02**

(30) Priorité : **16.05.91 FR 9105969**

(43) Date de publication de la demande :
**19.11.92 Bulletin 92/47**

(84) Etats contractants désignés :
**AT BE CH DE DK ES GB IT LI NL SE**

(71) Demandeur : **RENA FRANCE (S.A.)**
**25, Avenue du Pont-de-Tasset, Z.I. Meythet**
**F-74000 Annecy (FR)**

(72) Inventeur : **Point, Jacques**
**Les Pagaises**
**F-74370 Les Ollières (FR)**

(74) Mandataire : **Gasquet, Denis**
**Les Pléiades no. 24C, Park Nord-Annecy**
**F-74370 Metz-Tessy (FR)**

(54) **Appareil de distribution de nourriture pour faune aquatique.**

(57)    Appareil de distribution de nourriture pour faune aquatique notamment aquarium, comprenant un carter (2) dans lequel sont disposés des moyens de transfert (4), en particulier une vis sans fin disposée dans un canal du carter, de la nourriture d'une zone de départ (12) à une zone d'évacuation (17) auxquelles sont associées une ouverture d'accès (11) et une ouverture de sortie (18) du carter, le carter présentant à la périphérie de son ouverture d'accès des moyens d'accouplement (10a) complémentaires de moyens d'accouplement (13a) prévus sur une boîte (14) constituant une réserve de nourriture et présentant une ouverture (13) communiquant avec la zone de départ précitée lorsque cette boîte est accouplée au carter.

FIG.1

EP 0 514 291 A2

La présente invention concerne un appareil de distribution de nourriture pour faune aquatique et plus particulièrement un appareil de distribution de nourriture à la surface de l'eau dans un aquarium.

Les distributeurs actuellement utilisés présentent généralement des problèmes d'utilisation et des problèmes liés à l'ambiance humide existant au dessus de la surface de l'eau.

La présente invention à pour but de remédier notamment à ces inconvénients.

Selon un objet de l'invention, l'appareil de distribution de nourriture comprend un carter dans lequel sont disposés des moyens de transfert, en particulier une vis sans fin disposée dans un canal du carter, de la nourriture d'une zone de départ à une zone d'évacuation auxquelles sont associées une ouverture d'accès et une ouverture de sortie du carter.

Le carter présente, de préférence, à la périphérie de son ouverture d'accès, des moyens d'accouplement complémentaires de moyens d'accouplement prévus sur une boîte constituant une réserve de nourriture et présentant une ouverture communiquant avec la zone de départ précitée lorsque cette boîte est accouplée au carter.

Selon l'invention, lesdits moyens d'accouplement sont de préférence constitués par des pas de vis complémentaires.

Selon l'invention, ladite ouverture d'accès du carter peut avantageusement être tournée vers le haut, de telle sorte que la boîte précitée peut être montée à l'envers.

Selon un autre objet de l'invention, entre la zone de départ et la zone d'évacuation précitées, le carter présente, de préférence, une zone cylindrique entourant la vis sans fin précitée.

Selon un autre objet de l'invention, l'appareil comprend de préférence, un clapet mobile adapté pour obturer l'ouverture d'évacuation précitée du carter.

Dans une exécution préférée, ledit clapet est formé par un organe rotatif solidaire de la vis sans fin précitée.

Dans un exemple de réalisation simple, l'ouverture d'évacuation précitée du carter est ménagée dans la partie inférieure d'une partie cylindrique du carter, ledit clapet présentant une partie cylindrique entourant ou engagée dans la partie cylindrique ci-dessus du carter et dans laquelle est ménagée une ouverture susceptible de venir par rotation en correspondance avec l'ouverture d'évacuation du carter.

Selon l'invention, ledit clapet peut avantageusement présenter une paroi radiale portant l'une des extrémités de la vis sans fin précitée.

Selon un autre objet de l'invention, ledit carter est de préférence monté de manière amovible sur un support, ce carter et ce support présentant des moyens de positionnement réciproques.

Selon l'invention, ledit support peut avantageusement présenter un boîtier renfermant des moyens moteurs présentant un arbre de sortie, cet arbre de sortie et l'une des extrémités de la vis sans fin précitée présentant des moyens d'accouplement réciproques par contact.

Dans une exécution particuliaire, lesdits moyens de positionnement peuvent être constitués par des parois du carter et du support qui s'étendent perpendiculairement à l'axe de la vis sans fin précité, l'arbre de sortie précité présentant une fente latérale dans laquelle s'engage l'extrémité précitée de la vis sans fin.

Selon un autre objet de l'invention, dans la zone d'évacuation précitée, le volume du canal précité est de préférence supérieur au volume enveloppant de la vis sans fin.

Selon un autre objet de l'invention, le support précité présente de préférence des moyens de fixation sur le bord supérieur d'une paroi verticale d'un aquarium.

De préférence, lesdits moyens de fixation sont formés par une fente ou rainure dudit support et des moyens de rattrapage de jeu.

La présente invention sera mieux comprise à l'étude d'un appareil de distribution de nourriture pour faune aquatique décrit à titre d'exemple non limitatif et illustré par le dessin sur lequel :

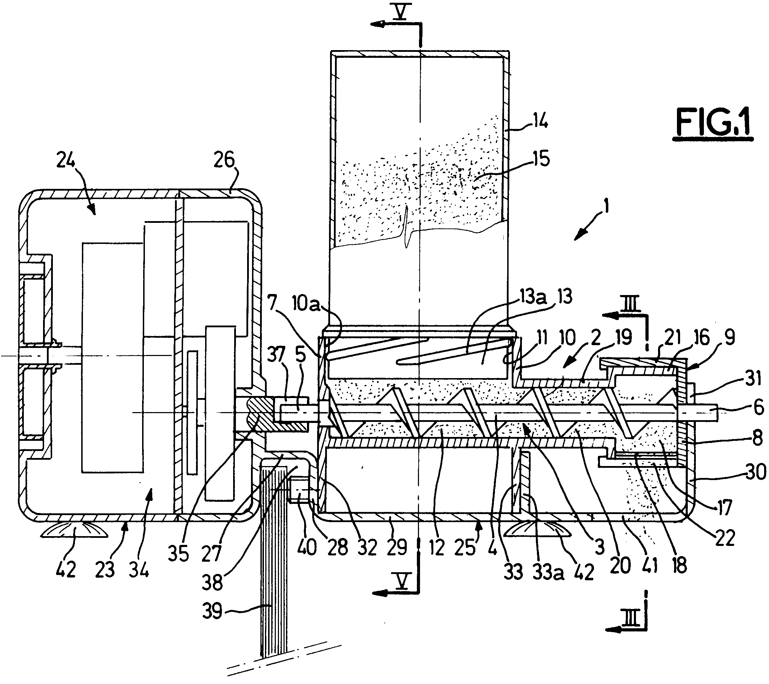

- la figure 1 représente une coupe verticale longitudinale d'un appareil selon la présente invention;

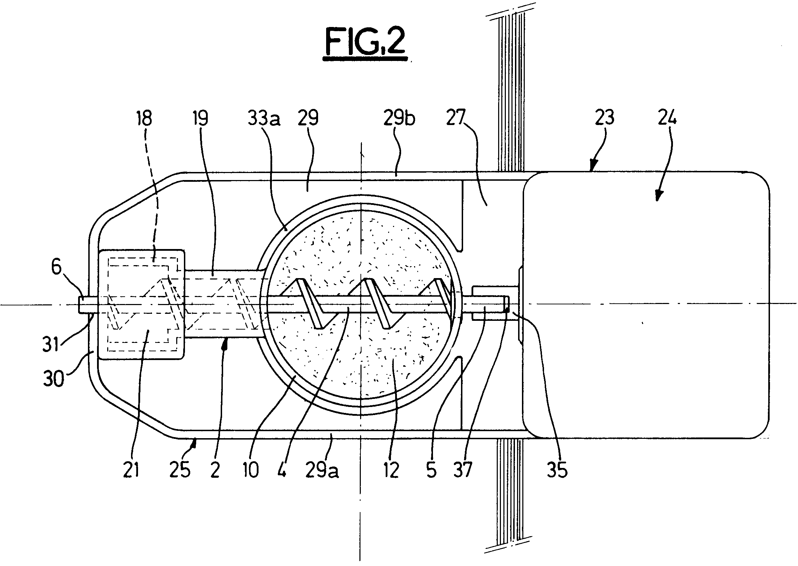

- la figure 2 représente une vue de dessus de l'appareil représenté sur la figure 1;

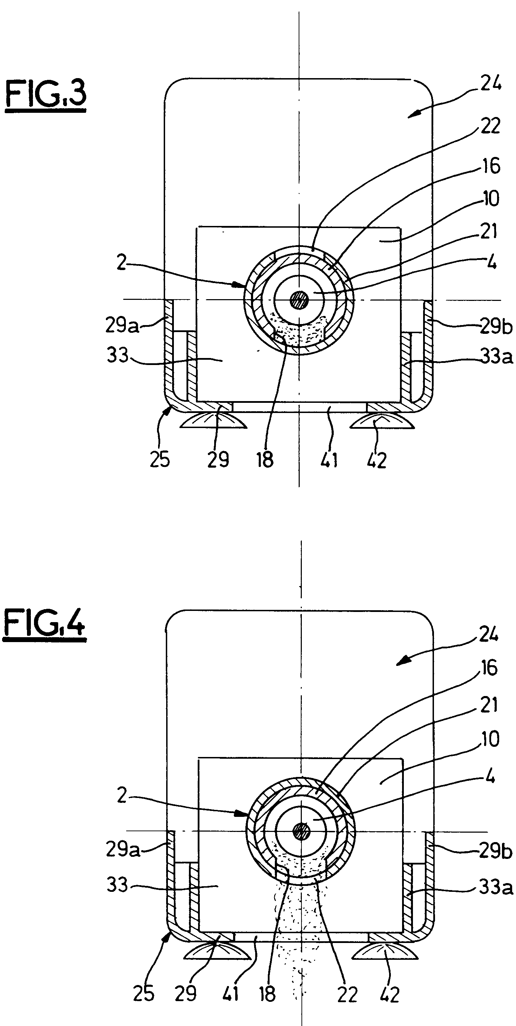

- la figure 3 représente une coupe transversale selon III-III de la figure 2, en position obturée;

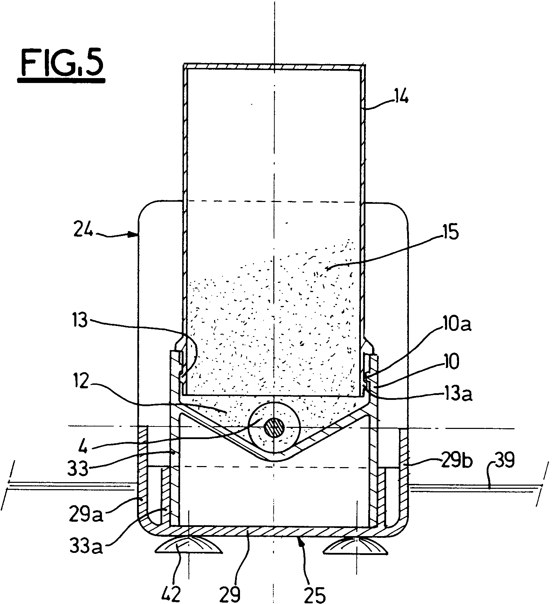

- la figure 4 représente une coupe correspondant à la figure 3, en position d'alimentation.
- et la figure 5 représente une coupe transversale selon V-V de la figure 1.

L'appareil de distribution représenté sur les figures et repéré d'une manière générale par la référence 1 comprend un carter repéré d'une manière générale par la référence 2 qui présente un canal horizontal 3 dans lequel s'étend une vis sans fin horizontale 4 dont les parties d'extrémité 5 et 6 s'étendent respectivement au travers d'une paroi arrière 7 du carter 2 et au travers d'une paroi radiale 8 d'un clapet repéré d'une manière générale par la référence 9 que l'on décrira plus loin.

Le carter 2 présente, du côté de sa paroi radiale arrière 7, une paroi cylindrique 10 en saillie vers le haut qui détermine une ouverture d'accès 11 à une zone de départ 12 du canal 3.

Dans la partie cylindrique 10 du carter 2 est engagée l'extrémité cylindrique 13 d'une boîte cylindrique 14 montée à l'envers et constituant une réserve de nourriture 15. La partie 10 du carter 2 et l'extrémité cylindrique 13 de la boîte 14 présentent des pas de vis complémentaires 10a et 13a de fixation.

Du côté de la paroi radiale 8 du clapet 9, le carter 2 présente une paroi cylindrique 16 dont le diamètre est légèrement supérieur à celui de la vis sans fin 4 et qui détermine une zone 17 d'évacuation.

A sa partie inférieure, cette paroi 16 présente une ouverture 18.

Entre la zone de départ 12 et la zone d'évacuation 17, le carter 2 présente une partie cylindrique 19 qui entoure étroitement la vis sans fin 4 et qui s'étend sur une longueur au moins égale à un tour du filet de la vis sans fin 4 pour former ainsi une zone médiane 20 du canal 3.

Le clapet 9 présente, à partir de sa paroi radiale 8 qui est solidaire de la vis sans fin 4 par tout moyen connu, une partie cylindrique 21 qui enveloppe la partie cylindrique 16 du carter 2. Cette partie cylindrique 21 présente dans sa paroi une ouverture 22 qui, lorsqu'elle est en face de l'ouverture inférieure d'évacuation 18 du carter 2, présente la même dimension.

L'appareil 1 comprend en outre un support repéré d'une manière générale par la référence 23 qui présente d'une part un boîtier parallélipipédique 24 et d'autre part une plate-forme 25 qui s'étend latéralement à l'une des parois verticales 26 de ce boîtier 24.

La plate-forme 5 présente, à partir de la paroi 26 du boîtier 24 et successivement, une paroi horizontale 27, une paroi verticale 28 qui s'étend vers le bas, une paroi horizontale 29 qui va en s'éloignant de la paroi 26 du boîtier 24 et une paroi avant 30 qui s'étend verticalement et vers le haut, la paroi horizontale 29 présentant des rebords latéraux 29a et 29b s'étendant vers le haut.

Cette forme de la plate-forme 25 est destinée à recevoir par engagement par le dessus le carter 2 de la manière suivante.

En position montée, la face extérieure de la partie radiale 8 du clapet 9 solidaire du carter 2 est en contact avec la face intérieure de la paroi d'extrémité 30 de la plate-forme 25, l'extrémité dépassante 6 de la vis sans fin 4 étant engagée verticalement au fond d'un évidement 31 ménagée dans le bord supérieur de cette dernière. La paroi arrière 7 du carter 2 est prolongé vers le bas par une paroi 32 qui est en contact avec la face intérieure de la paroi verticale 28 de la plate-forme 25.

En dessous de sa zone 12, le carter 2 présente une paroi verticale annulaire 33 qui est engagée verticalement dans une partie annulaire 33a de la paroi horizontale 29 de la plate-forme 25, cette partie annulaire 33a étant en saillie vers le haut. En position montée, l'extrémité inférieure de la partie en saillie 33 est en appui sur la face supérieure de la paroi 29 horizontale de la plate-forme 25.

Ainsi, le carter 2 est monté de manière amovible sur la plate-forme 25 du support 23 dans une position telle que la vis sans fin 4 s'étend horizontalement, perpendiculairement à la paroi verticale 26 du boîtier 24, l'extrémité dépassante 5 de cette vis sans fin 4 s'étendant au-dessus et à distance de la paroi horizontale 27 de la plate-forme 25.

Le boîtier 24 renferme un ensemble moto-réducteur 34 qui présente un arbre de sortie 35 qui s'étend au travers de sa paroi verticale 26 et qui présente une fente 37 débouchant à son extrémité et latéralement, dans laquelle est engagée l'extrémité 5 de la vis sans fin 4, cette dernière présentant deux méplats parallèles opposés venant en contact avec les faces parallèles opposées de cet évidement 37. Ainsi, lorsque le carter 2 est monté sur la plate-forme 25 comme on l'a décrit précédemment, l'arbre 35 est accouplé à la vis sans fin 4, ces derniers étant en alignement.

En outre, la paroi verticale 28 de la plate-forme 25 et la partie inférieure de la paroi verticale 26 du boîter 24 déterminent entre elles et au-dessous de la paroi horizontale 27 de la plate-forme 26, une rainure ou fente transversale 38 dans laquelle est engagé le bord supérieur d'une paroi verticale 39 d'un aquarium non représenté par ailleurs, grâce à des vis de rattrapage de jeu et de pincement 40 prévues sur le support 23, le bord supérieur de cette paroi 39 peut être pincé et le support 23 convenablement maintenu, la plate-forme 25 portant le carter 2 s'étendant au-dessus et à distance de l'eau contenue dans l'aquarium tandis que le boîtier 24 est à l'extérieur.

Enfin, la paroi horizontale 29 de la plate-forme 25 présente une grande ouverture 41 prévue au-dessous de l'ouverture d'évacuation 18 du carter 2 et la face inférieure de la paroi 29 de la plate-forme 25 et la face inférieure du boîtier 24, qui sont dans le même plan horizontal, sont munies de ventouses 42 qui constituent un autre moyen de fixation de l'appareil 1 sur par exemple une paroi horizontale supérieure d'un aquarium.

L'appareil de distribution de nourriture 1 décrit ci-dessus peut être utilisé et fonctionne de la manière suivante.

Lorsque la vis sans fin 4 est entraînée en rotation par l'ensemble moto-réducteur 34, elle entraîne la nourriture 15 de la zone d'accès 12 à la zone d'évacuation 17 du canal 3 du carter 2, au travers de sa zone médiane 20.

En même temps, la vis sans fin 4 entraîne en rotation le clapet 9. Lorsque la paroi cylindrique 21 de ce clapet 9 se déplace devant l'ouverture d'évacuation 18 du carter 2, la nourriture 15 s'amasse dans la zone d'évacuation 17 du canal 3 délimitée à sa périphérie par la paroi cylindrique 16 du carter 2. Lorsque l'ouverture 22 de la paroi cylindrique 21 du clapet 9 découvre l'ouverture d'évacuation 18 du carter 2, la nourriture tombe par gravité et sous l'effet de la vis sans fin 4, traverse l'ouverture 41 de la paroi horizontale 29 de la plate-forme 25 et se répand sur la face supérieure de l'eau contenue dans l'aquarium auquel est fixé l'appareil 1.

Ce cycle de fermeture et d'ouverture de l'ouverture d'évacuation 18 du carter 2 se renouvelle à chaque rotation de la vis sans fin 4. Bien entendu, la paroi cylindrique 21 du clapet 9 pourrait présenter plusieurs ouvertures réparties sur sa périphérie.

Au fur et à mesure que la vis sans fin 4 entraîne la nourriture, celle contenue dans la boîte 15 descend par gravité dans la zone de départ 12 du canal 3 du carter 2.

Bien entendu, l'ensemble moto-réducteur 34 de l'appareil 1 est soumis à un ensemble électrique ou électronique de commande non représenté qui permet l'arrêt de la vis sans fin 4 dans une position telle que l'ouverture 22 du clapet 9 n'est pas en face de l'ouverture d'évacuation 18 du carter 2 et la fente 37 de l'arbre de sortie 35 est ouverte vers le haut. Cet ensemble de commande est de préférence adapté pour faire tourner la vis sans fin 4 à des moments espacés et pour la faire tourner à chaque fois d'un nombre de tours prédéterminé, ce temps et ce nombre étant de préférence programmable par l'utilisateur.

Grâce à sa structure et à son fonctionnement décrits ci-dessus, la nourriture contenue dans le carter 2 et dans la boîte 14 est isolée de l'air ambiant qui, au-dessus de l'eau, est humide. Ce résultat est obtenu d'une part par le clapet 9 et d'autre part par la nourriture qui se trouve dans la zone médiane 20 du carter 2 séparant la zone de départ 12 et la zone d'évacuation 17 du canal 3. L'appareil 1 risque donc peu de se colmater. De plus, le boîtier 24 n'est pas au-dessus de l'eau et subit donc moins l'humidité.

Lorsque toute la nourriture 15 contenue dans la boîte 14 a été évacuée, on peut procéder de la manière suivante pour son changement.

L'appareil 1 étant dans la position d'arrêt décrite précédemment, on désaccouple le carter 2 de la plate-forme 25 du support 23 et l'extrémité de la vis sans fin 4 de l'arbre 35 en tirant le carter 2 vers le haut. On renverse le carter 2 et on désaccouple la boîte 14 en la dévissant.

On prend une nouvelle boîte 14 pleine et, après avoir retirer son couvercle qui peut avantageusement lui être accouplé par les pas de vis 13a et éventuellement son opercule de protection de la nourriture qu'elle contient, on visse son extrémité 13 dans la partie en saillie 14 du carter 2 par en-dessous, sans la renverser. De cette manière, il n'y aucune perte de nourriture.

La nouvelle boîte 14 étant accouplée au carter 2, on renverse ce dernier de telle sorte que la nouvelle boîte 14 s'étende au-dessus et on réaccouple le carter 2 à la plate-forme 25 du support 23 et la vis sans fin 4 à l'arbre de sortie 25 en l'engageant par en-dessus et verticalement jusqu'en butée sur la plat-forme 25.

L'appareil 1 est de nouveau prêt à fonctionner comme on l'a décrit précédemment.

La présente invention ne se limite pas à l'exemple-ci-dessus décrit. Bien des variantes de réalisation sont possibles sans sortir du cadre défini par les revendications annexées.

**Revendications**

1. Appareil de distribution de nourriture pour faune aquatique notamment aquarium, caractérisé par le fait qu'il comprend un carter (2) dans lequel sont disposés des moyens de transfert (4), en particulier une vis sans fin disposée dans un canal du carter, de la nourriture d'une zone de départ (12) à une zone d'évacuation (17) auxquelles sont associées une ouverture d'accès (11) tournée vers le haut et une ouverture de sortie (18) du carter, le carter présentant à la périphérie de son ouverture d'accès des moyens d'accouplement (10a) complémentaires de moyens d'accouplement (13a) prévus sur une boîte amovible constituant une réserve de nourriture et présentant une ouverture (13) communiquant avec la zone de départ précitée lorsque cette boîte, montée à l'envers, est accouplée au carter, lesdits moyens d'accouplement étant constitués par des pas de vis complémentaires et le pas de vis de la boîte précitée (14) étant complémentaire du pas de vis du couvercle amovible de cette boîte.

2. Appareil de distribution de nourriture pour faune aquatique notamment aquarium, caractérisé par le fait qu'il comprend un carter (2) dans lequel sont disposés des moyens de transfert (4), en particulier une vis sans fin disposée dans un canal du carter, de la nourriture d'une zone de départ (12) à une zone d'évacuation (17) auxquelles. sont associées une ouverture d'accès (11) et une ouverture de sortie (18) du carter, le carter étant muni d'une boîte (14) constituant une réserve de nourriture et présentant une ouverture (13) communiquant avec la zone de départ précitée, lesdits moyens de transfert comprenant une vis sans fin disposée dans un canal du carter, cette vis sans fin étant solidaire en rotation d'un organe rotatif formant un clapet (9) adapté pour obturer l'ouverture d'évacuation précitée (18) du carter.

3. Appareil selon la revendication 2, caractérisé par le fait que l'ouverture d'évacuation précitée est ménagée dans la partie inférieure d'une partie cylindrique (16) du carter, ledit clapet (9) présentant une partie cylindrique (21) entourant ou engagée dans la partie cylindrique (16) du carter et dans laquelle est ménagée au moins une ouverture (22) susceptible de venir par rotation en correspondance avec l'ouverture d'évacuation (18) du carter.

4. Appareil selon la revendication 3, caractérisé par le fait que ledit clapet présente une paroi radiale (8) portant l'une des extrémités de la vis sans fin précitée.

**5.** Appareil selon l'une quelconque des revendications précédentes, caractérisé par le fait que ledit carter (2) est monté de manière amovible sur un support (23), ce carter et ce support présentant des moyens de positionnement réciproques, ce support renfermant des moyens moteurs, desdits moyens de transfert.

**6.** Appareil de distribution de nourriture pour faune aquatique notamment aquarium, caractérisé par le fait qu'il comprend un carter (2) dans lequel sont disposés des moyens de transfert (4), en particulier une vis sans fin disposée dans un canal du carter, de la nourriture d'une zone de départ (12) à une zone d'évacuation (17) auxquelles sont associées une ouverture d'accès (11) et une ouverture de sortie (18) du carter, le carter étant muni d'une boîte (14) constituant une réserve de nourriture et présentant une ouverture (13) communiquant avec la zone de départ précitée, ledit carter (2) étant monté de manière amovible sur un support (23), ce carter et ce support présentant des moyens de positionnement réciproques, et ce support (23) renfermant des moyens moteurs desdits moyens de transfert.

**7.** Appareil selon la revendication 6, caractérisé par le fait que lesdits moyens de fixation sont formés par une fente ou rainure (38) dudit support (23) et de moyens de rattrapage de jeu (40).

**8.** Appareil selon la revendication 7, caractérisé par le fait qu'il comprend un clapet mobile (9) adapté pour obturer l'ouverture d'évacuation précitée (18) du carter.

**9.** Appareil selon la revendication 8, caractérisé par le fait que ledit clapet est formé par un organe rotatif (9) solidaire de la vis sans fin précitée.

**10.** Appareil selon l'une des revendications 8 et 9, caractérisé par le fait que l'ouverture d'évacuation précitée du carter est ménagée dans la partie inférieure d'une partie cylindrique(16) du carter, ledit clapet (9) présentant une partie cylindrique (21) entourant ou engagée dans la partie cylindrique ci-dessus du carter et dans laquelle est ménagée au moins une ouverture (22) susceptible de venir par rotation en correspondance avec l'ouverture d'évacuation (18) du carter.

**11.** Appareil selon l'une quelconque des revendications 5 et 11, caractérisé par le fait que ledit support (23) présente un boîtier (24) renfermant des moyens moteurs, ces derniers présentant un arbre de sortie (35), cet arbre de sortie et l'une (5) des extrémités de la vis sans fin précitée présentant des moyens d'accouplement réciproques par contact.

**12.** Appareil selon l'une quelconque des revendications 5 à 11, caractérisé par le fait que lesdits moyens de positionnement sont constitués par des parois du carter (2) et du support (25) qui s'étendent perpendiculairement à l'axe de la vis sans fin précité (4), l'arbre de sortie précité présentant une fente latérale (37) dans laquelle s'engage l'extrémité d'accouplement (5) de la vis sans fin précitée.

**13.** Appareil selon l'une quelconque des revendications 5 à 12, caractérisé par le fait que le support précité présente des moyens de fixation (38) sur le bord supérieur d'une paroi verticale d'un aquarium.

**14.** Appareil selon l'une quelconque des revendications 2 à 13, caractérisé par le fait que ledit carter (2) présente, à la périphérie de son ouverture d'accès tournée vers le haut, des moyens d'accouplement (10a) complémentaires de moyens d'accouplement (13a) prévus sur ladite boîte (14), cette boîte étant accouplée à l'envers au carter et étant amovible.

**15.** Appareil selon la revendication 14, caractérisé par le fait que lesdits moyens d'accouplement sont constitués par des pas de vis complémentaires, le pas de vis de la boîte étant complémentaire du pas de vis de son couvercle amovible.

**16.** Appareil selon l'une quelconque des revendications précédentes, caractérisé par le fait qu'entre la zone de départ et la zone d'évacuation précitées, le carter présente une zone cylindrique (20) entourant la vis sans fin précitée.

**17.** Appareil selon l'une quelconque des revendications précédentes, caractérisé par le fait que, dans la zone d'évacuation précitée (17) le volume du canal précité est supérieur au volume enveloppant de la vis sans fin.

FIG.1

FIG.2

FIG.3

FIG.4

# FIG.5